# EUROPÄISCHE PATENTSCHRIFT

(11) **EP 4 570 522 B1**
(45) Veröffentlichungstag und Bekanntmachung des Hinweises auf die Patenterteilung: **22.07.2026**
(21) Anmeldenummer: 24212546.6
(22) Anmeldetag: 13.11.2024
(51) Int. Cl.: B60C 11/00, B60C 17/06

(54) **FAHRZEUGLUFTREIFEN AUFWEISEND EINE PLATTE UND FAHRZEUGRAD**
PNEUMATIC VEHICLE TYRE COMPRISING A PLATE AND A VEHICLE WHEEL
PNEUMATIQUE DE VÉHICULE COMPRENANT UNE PLAQUE ET UNE ROUE DE VÉHICULE

(30) Priorität: 13.12.2023 DE 102023212575
(43) Veröffentlichungstag der Anmeldung: 18.06.2025
(73) Patentinhaber: Continental Reifen Deutschland GmbH, 30175 Hannover (DE)
(72) Erfinder: Krieger, Ralf, 30175 Hannover (DE); Welzhofer, Martin, 30175 Hannover (DE); Grion, Mario, 30175 Hannover (DE)
(74) Vertreter: Continental Corporation

(56) Entgegenhaltungen:
- CN-A- 104 290 539
- CN-A- 105 034 697
- CN-A- 105 346 332
- US-A1- 2018 244 105
- US-A1- 2023 150 306

## Beschreibung

Die Erfindung betrifft einen Fahrzeugluftreifen, bevorzugt Leichtfahrzeugreifen, besonders bevorzugt Fahrradreifen und/oder Rollstuhlreifen und/oder Motorradreifen, aufweisend Wulstbereiche, zwei sich von den Wulstbereichen nach radial außen erstreckende Seitenwände, eine von Wulstbereich zu Wulstbereich über die Seitenwände erstreckte Karkasse und einen radial außerhalb der Karkasse angeordneten Laufstreifen, und aufweisend eine radial innerhalb des Laufstreifens zumindest in der axialen Mitte des Reifens angeordnete Platte aus Polyurethan, wobei die Platte als Teil des Reifens stoffschlüssig mit weiteren Bauteilen des Reifens verbunden ist. Weiter betrifft die Erfindung ein Fahrzeugrad aufweisend einen solchen Fahrzeugluftreifen.

Zur Reduzierung der Pannenhäufigkeit von Fahrzeugluftreifen sind verschiedene Strategien bekannt. So kann der Reifen selbst verstärkt werden, beispielsweise durch eine Vergrößerung der Gummidicke einzelner Bauteile des Reifens, wie etwa dem Laufstreifen, oder durch zusätzliche und/oder stärkere Festigkeitsträgerlagen. Durch derartige Maßnahmen kann beispielsweise das Durchdringen eines Festkörpers durch den Reifen erschwert oder gar verhindert werden.

Aus der NL 7812531 A ist ein Liner aus einem geschäumten Material bekannt, welcher in der axialen Mitte des Reifens als zusätzliche separat eingelegte Lage zwischen Reifen und Schlauch den Schlauch vor einem Durchstich schützen soll. Ein separat eingelegtes Teil kann sich jedoch durch die zyklische Verformung der Bauteile verlagern und somit einen negativen Einfluss auf den Rundlauf verursachen.

Aus der FR 2844222 A1 ist eine zusätzliche Membran aus Polyurethan bekannt, welche zwischen Reifen und Schlauch stoffschlüssig angeordnet ist und den Schlauch vor einem Durchstich schützen soll.

Mit derartigen Maßnahmen einher geht allerdings oftmals ein erhöhter Materialaufwand und damit verbunden ein erhöhter Rollwiderstand des Reifens und ein unvorteilhaftes Fahrverhalten.

CN 105 346 332 A, CN 105 034 697 A und CN 104 290 539 A beschreiben jeweils Vollgummireifen, bei denen der tragende Stützkörper aus einem expandierten thermoplastischen Polyurethan (eTPU) gefertigt ist.

Es war die primäre Aufgabe der vorliegenden Erfindung, die vorstehend beschriebenen Nachteile des Standes der Technik auszuräumen oder zumindest zu verringern. Es war dabei die primäre Aufgabe, einen Fahrzeugluftreifen, bevorzugt Leichtfahrzeugreifen, besonders bevorzugt Fahrradreifen und/oder Rollstuhlreifen und/oder Motorradreifen, zur Verfügung zu stellen, der eine verbesserte Pannensicherheit und Recyclingfähigkeit bei nur geringfügig höherem Rollwiderstand aufweist.

Die Aufgabe wird dadurch gelöst, dass das Polyurethan der Platte ein expandiertes thermoplastisches Polyurethan (eTPU) ist.

Erstaunlicherweise hat es sich gezeigt, dass ein derartiger Fahrzeugluftreifen eine verbesserte Pannensicherheit bei gleichzeitig nur geringfügig verschlechtertem Rollwiderstand ermöglicht.

Es hat sich gezeigt, dass sich eine Platte aus eTPU hervorragend zur Verbesserung der Pannensicherheit von Fahrzeugluftreifen eignet. Das eTPU weist als geschäumtes Material eine geringe Massendichte auf. Die Platte aus eTPU vereint somit ein geringes Gewicht mit hoher Dauerbelastbarkeit. Zudem zeichnet sich die Platte aufgrund des hohen Luftanteils des eTPUs durch einen nur geringen Hystereseverlust aus.

Die vergrößerte Materialstärke des Reifens durch die Platte aus eTPU verringert die Wahrscheinlichkeit eines vollständigen Durchstichs des Fahrzeugluftreifens durch einen Fremdkörper. Das eTPU weist eine hohe Elastizität auf. Im Falle einer vollständigen Penetration der Platte dichtet die Platte aus eTPU den Einstichkanal so ab, dass ein größerer Luftverlust vermieden wird. Der Reifen aufweisend die Platte weist somit eine deutlich verbesserte Robustheit gegenüber Durchstichen und anderen Verletzungen auf.

Trotz der vergrößerten Materialstärke des Reifens weist der Reifen durch den Einsatz des eTPU nur ein geringes Mehrgewicht sowie einen nur geringen Hystereseverlust gegenüber einem herkömmlichen Reifen ohne Platte auf. Gegenüber Reifen mit herkömmlichen Platten, z.B. aus herkömmlichem Polyurethan gleicher Stärke, sind das verringerte Materialgewicht und die hervorragenden elastischen Eigenschaften der Platte vorteilhaft. Ebenso sind die Flexibilität sowie die Fahreigenschaften des Luftreifens aufweisend eine derartige Platte nur geringfügig eingeschränkt.

Durch die thermoplastischen Eigenschaften des eTPU weist der Reifen vorteilhafte Recyclingeigenschaften auf. Das eTPU kann durch Wärmeeinwirkung verflüssigt und somit trotz der stoffschlüssigen Verbindung der Platte mit weiteren Bauteilen des Reifens auf einfache Art und Weise von diesen getrennt werden. Das so extrahierte eTPU kann wiederverwertet und einer Kreislaufwirtschaft zugeführt werden.

Die Platte ist stoffschlüssig mit weiteren Bauteilen des Luftreifens, wie etwa dem Laufstreifen und/oder der Karkasse und/oder einem Gürtel und/oder einem Innerliner, bevorzugt mit dem Laufstreifen und/oder der Karkasse, verbunden. Der erfindungsgemäße Reifen zeichnet sich somit zudem durch eine einfache Handhabung und Montage des Reifens aus. Anwendungsfehler, wie sie bei der Montage mit einem separat einzulegenden Schutzliner erfolgen können, werden vermieden, wodurch die Pannensicherheit weiter verbessert ist.

Es ist somit ein Fahrzeugluftreifen zur Verfügung gestellt, der eine verbesserte Pannensicherheit und Recyclingfähigkeit bei gleichzeitig nur geringfügig verschlechtertem Rollwiderstand aufweist.

"Platte aus" einem Material, beispielsweise aus Polyurethan bzw. eTPU, bedeutet im Sinne der Anmeldung, dass die Platte ganz oder teilweise aus dem Material, beispielsweise Polyurethan bzw. eTPU, besteht.

Bei dem thermoplastischen Polyurethan kann es sich um thermoplastisches Polyurethan aus Polyester und Polyurethan oder aus Polyether und Polyurethan handeln.

Bei dem eTPU kann es sich um das von der BASF SE unter dem Markennamen Infinergy ^{®} vertriebene expandierte thermoplastische Polyurethan handeln.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Rollstühle und/oder Motorräder und/oder Fahrzeuge der Fahrzeugklasse L im Sinne der EU Verordnung 168/2013, welche jeweils die Erfordernisse der Leermasse von maximal 425 kg erfüllen, besonders bevorzugt Fahrräder.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb des Fahrzeugs ausgelegt sein. Das Leichtfahrzeug, bevorzugt Fahrrad, kann als Lastenfahrzeug ausgelegt sein. Das Leichtfahrzeug kann zwei, drei, vier oder mehr Räder aufweisen.

Kraftfahrzeuge der Fahrzeugklasse L im Sinne der EU Verordnung 168/2013 umfassen insbesondere Fahrzeuge gemäß den Klassen L1e und/oder L2e und/oder L3e und/oder L4e und/oder L5e und/oder L6e.

Im Folgenden werden vorteilhafte Ausführungsformen der Erfindung erläutert.

Eine vorteilhafte Ausführungsform ist dadurch gegeben, dass das eTPU ein geschlossenporiges eTPU ist.

Das geschlossenporige eTPU weist einen besonders geringeren Rollwiderstand auf.

Eine vorteilhafte Ausführungsform ist dadurch gegeben, dass in der axialen Mitte des Reifens gilt, dass die Dicke D der Platte 10 % bis 50 %, bevorzugt 20 % bis 40 %, der Gesamtdicke G des Reifens beträgt.

Durch eine solche Dicke D des Reifens in der axialen Mitte ist ein Kompromiss aus Durchstichsicherheit, Materialeinsatz und Materialstärke des Reifens gegeben. Die Dicke D der Platte sowie die Gesamtdicke G des Reifens sind in der axialen Mitte in radialer Richtung rR gemessen.

Zweckmäßig ist es dabei, wenn die Platte zumindest auf 75% ihrer Breitenerstreckung eine derartige Dicke D von 10 % bis 50 %, bevorzugt von 20 % bis 40 %, der in der axialen Mitte gemessenen Gesamtdicke G des Reifens aufweist. Die Dicke außerhalb der axialen Mitte kann gemessen sein senkrecht zur Karkasse. Die Breitenerstreckung von Bauteilen, insbesondere der Platte und/oder des Laufstreifens, verläuft senkrecht zur Umfangsrichtung U parallel zur Karkasse.

Eine vorteilhafte Ausführungsform ist dadurch gegeben, dass die Platte in der axialen Mitte radial zwischen der Karkasse und dem Laufstreifen des Reifens, bevorzugt dabei mit der Karkasse und/oder dem Laufstreifen stoffschlüssig verbunden, angeordnet ist.

Durch eine derartige Anordnung ist die Karkasse des Reifens durch die radial außerhalb der Karkasse angeordnete Platte vor Beschädigung besser geschützt. Die strukturelle Integrität des Reifens ist somit noch besser geschützt.

Die Platte kann in der axialen Mitte nach radial innen mit der Karkasse und nach radial außen mit einem weiteren Bauteil des Reifens, wie dem Laufstreifen, jeweils stoffschlüssig verbunden sein.

Die Platte kann in der axialen Mitte nach radial außen mit dem Laufstreifen und nach radial innen mit einem weiteren Bauteil des Reifens, wie der Karkasse und/oder dem Gürtel, bevorzugt der Karkasse, jeweils stoffschlüssig verbunden sein.

Die Platte kann in der axialen Mitte sowohl mit dem Laufstreifen als auch mit der Karkasse stoffschlüssig verbunden sein. Hierdurch ist ein besonders einfacher Reifenaufbau, bevorzugt Aufbau eines Leichtfahrzeugreifens, besonders bevorzugt eines Fahrradreifens und/oder Rollstuhlreifens und/oder Motorradreifens, erwirkt.

Eine vorteilhafte Ausführungsform ist dadurch gegeben, dass die Platte in der axialen Mitte radial innerhalb der Karkasse, insbesondere mit der Karkasse stoffschlüssig verbunden, angeordnet ist.

Ein derartiger Fahrzeugluftreifen weist eine vereinfachte Herstellbarkeit auf. Der Reifen an sich kann ohne die Platte vorgefertigt, insbesondere fertig vulkanisiert, werden. Die Platte aus eTPU kann dann in den vorgefertigten Reifen eingebracht und formschlüssig mit dem Reifen, insbesondere der Karkasse und/oder einem Innerliner, bevorzugt der Karkasse, verbunden, insbesondere geklebt oder vulkanisiert, werden.

Bei der Anordnung radial innerhalb der Karkasse ist die Platte unterhalb des Laufstreifens nicht im Haupt-Verformungsbereich durch die Radlast angeordnet, wodurch der Hystereseverlust besonders gering ist.

Eine vorteilhafte Ausführungsform ist dadurch gegeben, dass die Platte sich über mindestens 80%, bevorzugt mindestens 100%, besonders bevorzugt mindestens 120 %, einer Breitenerstreckung des Laufstreifes erstreckt, gemessen parallel zur Karkasse, und dass die Platte radial außerhalb der Wulstbereiche endet.

Somit ist mindestens der Bereich innerhalb des Laufstreifens mit der größten Durchstich-Belastung geschützt.

Zweckmäßig ist es dabei, wenn die Platte in der axialen Mitte radial innerhalb der Karkasse, insbesondere stoffschlüssig mit der Karkasse verbunden, angeordnet ist.

Zweckmäßig ist es aber auch, wenn die Platte in der axialen Mitte radial zwischen der Karkasse und dem Laufstreifen des Reifens, bevorzugt dabei in der axialen Mitte des Reifens die Karkasse und/oder den Laufstreifen kontaktierend, angeordnet ist.

Eine vorteilhafte Ausführungsform ist dadurch gegeben, dass die Platte radial innerhalb der Karkasse angeordnet ist und dass sich die Platte von der axialen Mitte bis radial innerhalb der Wulstbereiche erstreckt, bevorzugt dass die Platte dabei dafür vorgesehen ist, bei dem auf einer Felge montierten Fahrzeugluftreifen die Felge zu kontaktieren.

Hierdurch ist es ermöglicht, dass die Platte den gesamten Reifen schützt. Durch die zusätzliche Steifigkeit im Seitenwandbereich durch die Strukturfestigkeit der Platte aus eTPU sind auch die Pannenlaufeigenschaften verbessert.

Die Platte ist in der axialen Mitte radial innerhalb der Karkasse, angeordnet. Bei Montage des Reifens auf einer Felge zusammen mit einem Schlauch ist dieser bis radial innerhalb der Wulstbereiche vorteilhaft geschützt.

Bei Montage des Reifens auf einer Felge zusammen mit einem Schlauch ist der Schlauch vor Anscheuerung an dem Reifen vorteilhaft geschützt. Ist die Platte derart ausgelegt, dass sie bei auf der Felge montiertem Reifen die Felge kontaktiert, ist der Schlauch vor Anscheuerung an der Felge vorteilhaft geschützt.

Eine vorteilhafte Ausführungsform ist dadurch gegeben, dass sich die Platte von der axialen Mitte aus über beide Seitenwände des Reifens erstreckt und insbesondere in den beiden Wulstbereichen endet.

Hierdurch sind auch die Seitenwände insbesondere bis zu den Wulstbereichen vor Beschädigung geschützt.

Zweckmäßig ist es dabei, wenn die Platte in der axialen Mitte radial zwischen der Karkasse und dem Laufstreifen des Reifens, bevorzugt dabei in der axialen Mitte des Reifens die Karkasse und/oder den Laufstreifen kontaktierend, angeordnet ist. Hierdurch ist die Karkasse im Seitenwandbereich von außen geschützt.

Eine vorteilhafte Ausführungsform ist dadurch gegeben, dass die Platte mindestens entlang der gesamten Ausdehnung des Laufstreifens angeordnet ist und insbesondere in Schulterbereichen des Reifens endet.

Hierdurch ist die Pannensicherheit gegenüber Punktion des Laufstreifens bei gleichzeitig geringem Materialeinsatz und damit hervorragendem Rollwiderstand verbessert.

Zweckmäßig ist es dabei, wenn die Platte in der axialen Mitte radial zwischen der Karkasse und dem Laufstreifen des Reifens, bevorzugt dabei in der axialen Mitte des Reifens die Karkasse und/oder den Laufstreifen kontaktierend, angeordnet ist.

Eine vorteilhafte Ausführungsform ist dadurch gegeben, dass die Platte zu mindestens 90 Gew.-%, bevorzugt zu mindestens 95 Gew.-%, besonders bevorzugt zu 100 Gew.-%, aus dem eTPU gebildet ist.

Eine vorteilhafte Ausführungsform ist dadurch gegeben, dass der Fahrzeugluftreifen inklusive der Platte einstückig mittels eines insbesondere formgebenden Vulkanisationsverfahrens hergestellt ist.

Hierdurch ist der Zusammenhalt zwischen der Platte mit den weiteren Bauteilen des Reifens besonders gut gegeben. Der Reifen ist ohne ein aufwändiges und fehleranfälliges nachträgliches Einlegen und ggf. stoffschlüssiges Verbinden zwischen Platte und bereits vulkanisiertem Reifen zur Verfügung gestellt und kann direkt montiert werden.

Die so hergestellte stoffschlüssige Verbindung zwischen der Platte und den weiteren Reifenbauteilen, wie beispielsweise der Laufstreifen und/oder die Karkasse, kann mittels mechanischer und/oder chemischer und/oder mikroskopischer Analyse von einer stoffschlüssigen Verbindung unterschieden werden, welche nachträglich zwischen einer Platte und einem bereits ausvulkanisierten Reifen, z.B. durch nachträgliches Kleben der Platte an den Reifen oder Kaltvulkanisation der Platte an den Reifen, hergestellt ist.

Eine vorteilhafte Ausführungsform ist dadurch gegeben, dass es sich um einen Reifen mit einer Reifenbreite von 18 mm bis 220 mm, bevorzugt von 23 mm bis 65 mm oder von 50 mm bis 180 mm handelt.

Die Reifenbreite ist die nominelle Querschnittsbreite des Reifens gemäß E.T.R.T.O. in der zum Anmeldezeitpunkt dieser Patentanmeldung geltenden Fassung.

Der Reifen aufweisend eine derartige Breite eignet sich hervorragend zur Verbesserung der Pannensicherheit und der Recyclingfähigkeit bei gleichzeitig vorteilhaftem Rollwiderstand, bevorzugt für Rollstühle und/oder Fahrräder.

Der Reifen kann eine Reifenbreite mit einem Wert von 23 mm bis 42 mm aufweisen. Ein solcher Reifen eignet sich für ein Rennrad. Der Reifen kann eine Reifenbreite mit einem Wert von 30 mm bis 65 mm aufweisen. Ein solcher Reifen eignet sich hervorragend für ein Gravelbike, City- oder Treckingrad. Der Reifen kann eine Reifenbreite mit einem Wert von 32 mm bis 55 mm aufweisen. Ein solcher Reifen eignet sich hervorragend für einen Rollstuhl. Der Reifen kann eine Reifenbreite mit einem Wert von 50 mm bis 122 mm aufweisen. Ein solcher Reifen eignet sich hervorragend für ein Mountainbike.

Eine vorteilhafte Ausführungsform ist dadurch gegeben, dass es sich um einen Fahrzeugluftreifen für ein Fahrrad und/oder einen Rollstuhl handelt.

Der Begriff "Fahrrad" umfasst im Sinne der Anmeldung Fahrräder unterschiedlichster Art, insbesondere Fahrräder mit zwei oder mehr Rädern.

Das Fahrrad kann rein mit Muskelkraft angetrieben sein und somit keinen Antriebsmotor aufweisen. Das Fahrrad kann aber auch einen Antriebsmotor, bevorzugt einen Elektromotor, zum Antrieb des Fahrrades aufweisen. Der bevorzugt elektrische Antriebsmotor kann dabei als Hilfsmotor zur Trittunterstützung, wie beispielsweise bei einem Pedelec oder einem S-Pedelec, ausgelegt sein. Es kann sich dabei um ein Lastenrad handeln, wie es beispielsweise zur Paketauslieferung genutzt wird.

Eine verbesserte Pannensicherheit bei gleichzeitig geringem Rollwiderstand ist bei Fahrrädern von großer Wichtigkeit.

Bei einem Einsatz des Reifens bei einem Fahrrad mit motorischem Hilfsantrieb ist ein hoher Pannenschutz vorteilhaft, da er die Zuverlässigkeit des Fahrzeuges erhöht. Gleichzeitig ermöglicht der geringe Rollwiderstand eine große Reichweite des Fahrrades.

Eine Erhöhung der Pannensicherheit ist auch für einen Rollstuhl von größter Wichtigkeit.

Eine vorteilhafte Ausführungsform ist dadurch gegeben, dass es sich um einen Fahrzeugluftreifen für ein Leichtfahrzeug mit einem motorischen Antrieb, bevorzugt mit einem hilfsweisen motorischen Antrieb oder einem rein motorischen Antrieb, handelt.

Auch für Leichtfahrzeuge mit einem motorischen Antrieb ist ein derartiger Fahrzeugluftreifen mit verbesserter Pannensicherheit und großer Reichweite vorteilhaft.

Der bevorzugt elektrische motorische Hilfsantrieb kann als Hilfsmotor der Trittunterstützung dienen.

Der Fahrzeugluftreifen kann geeignet sein für ein Leichtfahrzeug mit einem rein motorischen Antrieb, etwa für ein entsprechendes Kleinkraftrad und/oder Leichtkraftrad und/oder Kleinkraftrad und/oder Kraftrad und/oder Motorrad und/oder leichtes Squad.

Bezüglich des Fahrzeugrades wird die Aufgabe dadurch gelöst, dass das Fahrzeugrad eine Felge und einen auf der Felge montierten gemäß der Erfindung ausgeführten Fahrzeugluftreifen aufweist.

Ein solches Fahrzeugrad weist eine hohe Pannensicherheit bei gleichzeitig nur geringfügig verringerten Rollwiderstandseigenschaften auf.

Das Fahrzeugrad kann einen Fahrschlauch aufweisen.

Das Fahrzeugrad kann aber auch frei von einem Fahrschlauch sein. Der Fahrzeugluftreifen ist dann geeignet für den schlauchlosen Betrieb.

Alle in dieser Beschreibung wiedergegebenen Ausführungsformen der erfindungsgemäßen Fahrzeugluftreifen und Fahrzeugräder stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert. Dabei zeigt die

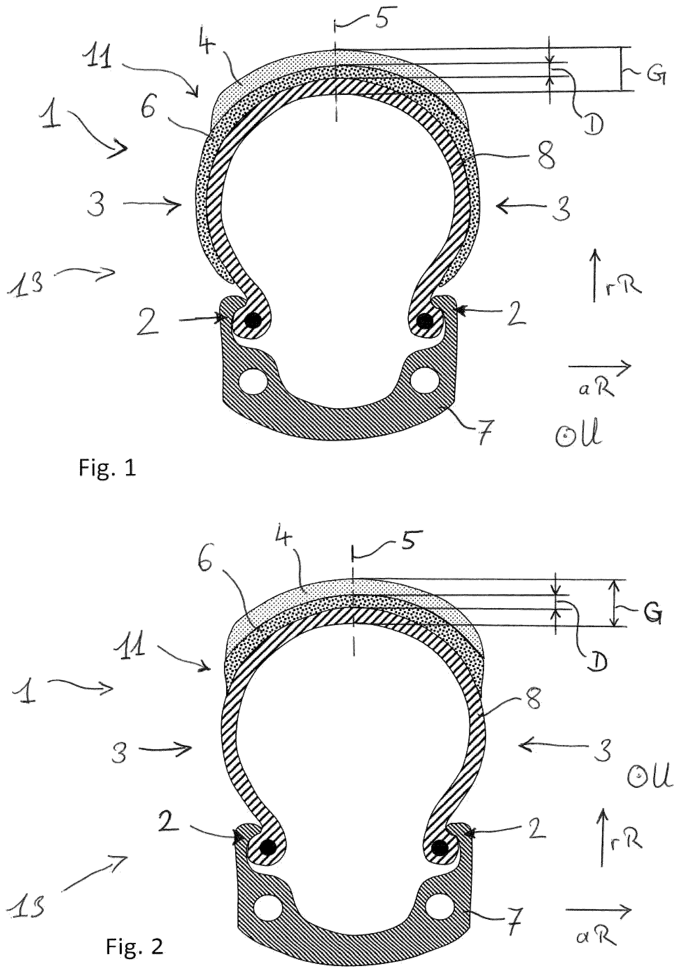

Figur 1 bis 4 jeweils einen Querschnitt eines Fahrzeugrades aufweisend einen auf einer Felge montierten Fahrzeugluftreifen gemäß der Erfindung.

Die Fig. 1 bis Fig. 4 zeigen jeweils einen Querschnitt eines Fahrzeugrades 13 aufweisend eine Felge 7 und einen auf der Felge montierten Fahrzeugluftreifen 1. Es kann sich um einen Leichtfahrzeugreifen 2 handeln, bevorzugt um eine Fahrradreifen und/oder Rollstuhlreifen und/oder Motorradreifen, besonders bevorzugt um einen Fahrradreifen.

Der Fahrzeugluftreifen 1 weist zwei Wulstbereiche 2, zwei sich von den Wulstbereichen nach radial außen erstreckende Seitenwände 3, eine von Wulstbereich zu Wulstbereich über die Seitenwände erstreckte Karkasse 8 und einen radial außerhalb der Karkasse 8 angeordneten Laufstreifen 4 auf. Die Karkasse 8 weist Festigkeitsträger auf, welche in den Seitenwänden einen Winkel von maximal 80° mit der radialen Richtung rR einschließen können. Weiter weist der Fahrzeugluftreifen 1 eine radial innerhalb des Laufstreifens 4 zumindest in der axialen Mitte 5 des Reifens angeordnete Platte 6 aus Polyurethan, welche als Teil des Reifens 1 stoffschlüssig mit weiteren Bauteilen des Reifens verbunden ist, auf. Das Polyurethan der Platte 6 ist ein expandiertes thermoplastisches Polyurethan eTPU.

Das eTPU kann ein geschlossenporiges eTPU sein. Die Platte ist zu mindestens 90 Gew.-%, bevorzugt zu mindestens 95 Gew.-%, besonders bevorzugt zu 100 Gew.-%, aus dem eTPU gebildet. Bei dem eTPU kann es sich um das von der BASF SE unter dem Markennamen Infinergy ^{®} vertriebene expandierte thermoplastische Polyurethan handeln.

In der axialen Mitte 5 des Reifens 1 kann gelten, dass die Dicke D der Platte 6 10 % bis 50 %, bevorzugt 20 % bis 40 %, der Gesamtdicke G des Reifens in der axialen Mitte beträgt, jeweils gemessen in radialer Richtung rR.

Die Platte 6 weist zumindest auf 75% ihrer Breitenerstreckung eine derartige Dicke D von 10 % bis 50 %, bevorzugt von 20 % bis 40 %, der in der axialen Mitte 5 gemessenen Gesamtdicke G des Reifens auf. Die Dicke D außerhalb der axialen Mitte 5 kann gemessen sein senkrecht zur Karkasse 8. Die Breitenerstreckung von Bauteilen, insbesondere der Platte 6 und/oder des Laufstreifens 4, verläuft senkrecht zur Umfangsrichtung U und parallel zur Karkasse 8. Die Platte 6 kann mindestens entlang der gesamten Breitenerstreckung des Laufstreifens 4, jeweils parallel zur Karkasse 8, angeordnet sein.

Der in der Figur 1 dargestellte Reifen 1 zeichnet sich dadurch aus, dass die Platte 6 in der axialen Mitte 5 radial zwischen der Karkasse 8 und dem Laufstreifen 4 angeordnet und mit diesen stoffschlüssig verbunden ist. Die Platte 6 ist von der axialen Mitte 5 aus über beide Seitenwände 3 des Reifens erstreckt und endet in den beiden Wulstbereichen 2.

Der in der Figur 2 dargestellte Reifen 1 zeichnet sich dadurch aus, dass die Platte 6 in der axialen Mitte 5 radial zwischen der Karkasse 8 und dem Laufstreifen 4 angeordnet und mit diesen stoffschlüssig verbunden ist. Die Platte 6 ist mindestens entlang der gesamten Ausdehnung des Laufstreifens 4 angeordnet und endet in Schulterbereichen 11 des Reifens.

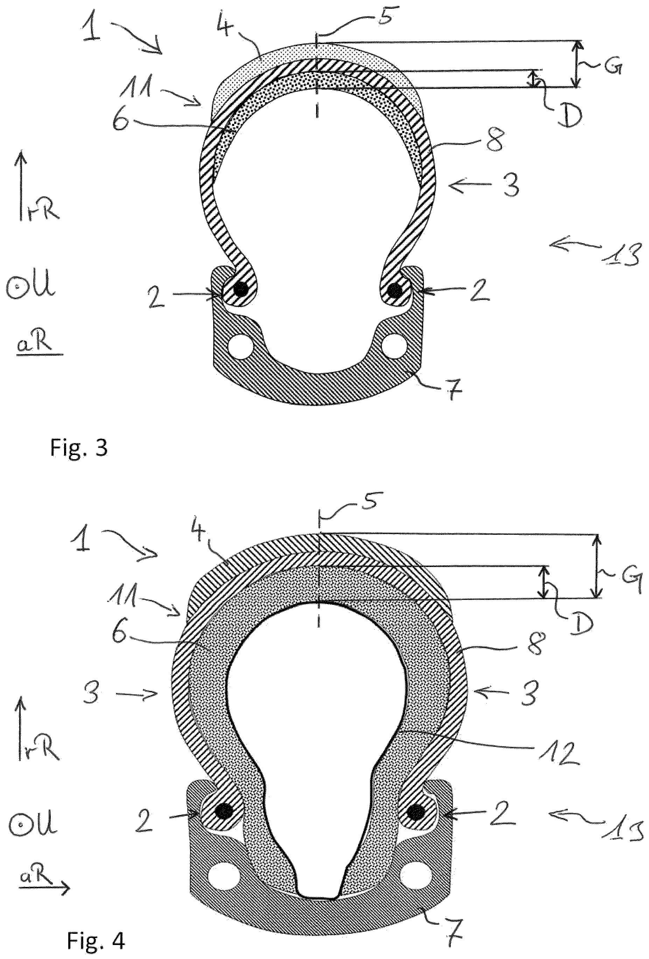

Der in der Figur 3 dargestellte Reifen 1 zeichnet sich dadurch aus, dass die Platte 6 in der axialen Mitte 5 radial innerhalb der Karkasse 8 angeordnet und mit dieser stoffschlüssig verbunden ist.

Die in den Figuren 1 bis 3 dargestellten Reifen 1 weisen eine Platte 6 auf, die sich über mindestens 80%, bevorzugt mindestens 100%, besonders bevorzugt mindestens 120 %, einer Breitenerstreckung des Laufstreifes 4 erstreckt, gemessen parallel zur Karkasse 4, und dass die Platte radial außerhalb der Wulstbereiche 2 endet.

Der in der Figur 4 dargestellte Reifen 1 zeichnet sich hingegen dadurch aus, dass sich die Platte 6 von der axialen Mitte 5 bis radial innerhalb der Wulstbereiche 2 erstreckt, wobei die Platte dabei bevorzugt dafür vorgesehen ist, bei dem auf der Felge 1 montierten Fahrzeugluftreifen 1 wie dargestellt die Felge zu kontaktieren. Bei einer Montage des Reifens 1 zusammen mit einem Schlauch 12, wie dargestellt, ist dieser bis radial innerhalb der Wulstbereiche 2 des Reifens vorteilhaft geschützt.

Die Platte 6 ist in der axialen Mitte 5 radial innerhalb der Karkasse 8, insbesondere stoffschlüssig mit der Karkasse verbunden, angeordnet.

Die in den Figuren 1 bis 4 dargestellten Fahrzeugluftreifen 1 können inklusive der Platte 6 einstückig mittels eines insbesondere formgebenden Vulkanisationsverfahrens hergestellt sein.

Die in den Figuren 1 bis 4 dargestellten Fahrzeugluftreifen 1 können eine Reifenbreite von 18 mm bis 220 mm, bevorzugt von 23 mm bis 65 mm oder von 50 mm bis 180 mm aufweisen. Fahrzeugluftreifen 1 dieser Breite eignen sich besonders gut als Fahrradreifen und/oder Rollstuhlreifen.

Die Erfindung ist nicht auf die dargestellten Ausführungsformen beschränkt. Gemäß der Erfindung ausgeführte Reifen können Fahrzeugluftreifen unterschiedlichen Typs sein. Es kann sich um Leichtfahrzeugreifen wie Fahrradreifen, Motorradreifen und/oder Krankenfahrstühle handeln.

### Bezugszeichenliste

- 1: Fahrzeugluftreifen
- 2: Wulstbereich
- 3: Seitenwand
- 4: Laufstreifen
- 5: axiale Mitte
- 6: Platte
- 7: Felge
- 8: Karkasse
- 11: Schulterbereich
- 12: Schlauch
- 13: Fahrzeugrad
- D: Dicke der Platte
- G: radiale Gesamtdicke des Reifens in der axialen Mitte
- rR: Radiale Richtung
- aR: axiale Richtung
- U: Umfangsrichtung

## Patentansprüche

1. Fahrzeugluftreifen (1), bevorzugt Leichtfahrzeugreifen, besonders bevorzugt Fahrradreifen und/oder Rollstuhlreifen und/oder Motorradreifen, aufweisend Wulstbereiche (2), zwei sich von den Wulstbereichen nach radial außen erstreckende Seitenwände (3), eine von Wulstbereich zu Wulstbereich über die Seitenwände erstreckte Karkasse (8) und einen radial außerhalb der Karkasse angeordneten Laufstreifen (4),
und aufweisend eine radial innerhalb des Laufstreifens (4) zumindest in der axialen Mitte (5) des Reifens angeordnete Platte (6) aus Polyurethan, wobei die Platte (6) als Teil des Reifens (1) stoffschlüssig mit weiteren Bauteilen des Reifens verbunden ist,
**dadurch gekennzeichnet, dass**
das Polyurethan der Platte (6) ein expandiertes thermoplastisches Polyurethan (eTPU) ist.

2. Fahrzeugluftreifen nach Anspruch 1, **dadurch gekennzeichnet, dass** das eTPU ein geschlossenporiges eTPU ist.

3. Fahrzeugluftreifen nach zumindest einem der vorhergehenden Ansprüche, **dadurch gekennzeichnet, dass** in der axialen Mitte (5) des Reifens (1) gilt, dass die Dicke D der Platte 10 % bis 50 %, bevorzugt 20 % bis 40 %, der Gesamtdicke G des Reifens beträgt.

4. Fahrzeugluftreifen nach zumindest einem der vorhergehenden Ansprüche, **dadurch gekennzeichnet, dass**
die Platte (6) in der axialen Mitte (5) radial zwischen der Karkasse (8) und dem Laufstreifen (4) des Reifens, bevorzugt dabei mit der Karkasse und/oder dem Laufstreifen stoffschlüssig verbunden, angeordnet ist.

5. Fahrzeugluftreifen nach zumindest einem der vorhergehenden Ansprüche, **dadurch gekennzeichnet, dass** die Platte (6) in der axialen Mitte (5) radial innerhalb der Karkasse (8), insbesondere mit der Karkasse stoffschlüssig verbunden, angeordnet ist.

6. Fahrzeugluftreifen nach zumindest einem der vorhergehenden Ansprüche, **dadurch gekennzeichnet, dass** die Platte (6) sich über mindestens 80%, bevorzugt mindestens 100%, besonders bevorzugt mindestens 120 %, einer Breitenerstreckung des Laufstreifes (4) erstreckt, gemessen parallel zur Karkasse (4), und dass die Platte radial außerhalb der Wulstbereiche (2) endet.

7. Fahrzeugluftreifen nach zumindest einem der vorhergehenden Ansprüche, **dadurch gekennzeichnet, dass** die Platte (6) radial innerhalb der Karkasse (8) angeordnet ist und dass sich die Platte (6) von der axialen Mitte (5) bis radial innerhalb der Wulstbereiche (2) erstreckt, bevorzugt dass die Platte dabei dafür vorgesehen ist, bei dem auf einer Felge (1) montierten Fahrzeugluftreifen (1) die Felge (1) zu kontaktieren.

8. Fahrzeugluftreifen nach zumindest einem der vorhergehenden Ansprüche, **dadurch gekennzeichnet, dass**
sich die Platte (6) von der axialen Mitte (5) aus über beide Seitenwände (3) des Reifens erstreckt und insbesondere in den beiden Wulstbereichen (2) endet.

9. Fahrzeugluftreifen nach zumindest einem der vorhergehenden Ansprüche, **dadurch gekennzeichnet, dass** die Platte (6) mindestens entlang der gesamten Ausdehnung des Laufstreifens (4) angeordnet ist und insbesondere in Schulterbereichen (11) des Reifens endet.

10. Fahrzeugluftreifen nach zumindest einem der vorhergehenden Ansprüche, **dadurch gekennzeichnet, dass** die Platte zu mindestens 90 Gew.-%, bevorzugt zu mindestens 95 Gew.-%, besonders bevorzugt zu 100 Gew.-%, aus dem eTPU gebildet ist.

11. Fahrzeugluftreifen nach zumindest einem der vorhergehenden Ansprüche, **dadurch gekennzeichnet, dass** der Fahrzeugluftreifen inklusive der Platte einstückig mittels eines insbesondere formgebenden Vulkanisationsverfahrens hergestellt ist.

12. Fahrzeugluftreifen nach zumindest einem der vorhergehenden Ansprüche, **dadurch gekennzeichnet, dass** es sich um einen Reifen mit einer Reifenbreite (12) von 18 mm bis 220 mm, bevorzugt von 23 mm bis 65 mm oder von 50 mm bis 180 mm handelt.

13. Fahrzeugluftreifen (1) nach zumindest einem der vorhergehenden Ansprüche, **dadurch gekennzeichnet, dass** es sich um einen Fahrzeugluftreifen für ein Fahrrad und/oder einen Rollstuhl handelt.

14. Fahrzeugluftreifen (1) nach zumindest einem der vorhergehenden Ansprüche, **dadurch gekennzeichnet, dass** es sich um einen Fahrzeugluftreifen für ein Leichtfahrzeug mit einem motorischen Antrieb, bevorzugt mit einem hilfsweisen motorischen Antrieb oder einem rein motorischen Antrieb, handelt.

15. Fahrzeugrad aufweisend eine Felge (7) und einen auf der Felge montierten Fahrzeugluftreifen (1) gemäß zumindest einem der vorhergehenden Ansprüche.

## Claims

1. Pneumatic vehicle tyre (1), preferably a light vehicle tyre, particularly preferably a bicycle tyre and/or wheelchair tyre and/or motorcycle tyre, comprising bead regions (2), two sidewalls (3), extending radially outwards from the bead regions, a carcass (8), made to extend from bead region to bead region over the sidewalls, and a tread (4), arranged radially outside the carcass,
and comprising a polyurethane sheet (6), arranged radially inside the tread (4), at least in the axial centre (5) of the tyre, wherein, as part of the tyre (1), the sheet (6) is connected in a material-bonding manner to further components of the tyre, **characterized in that**
the polyurethane of the sheet (6) is an expanded thermoplastic polyurethane (eTPU).

2. Pneumatic vehicle tyre according to Claim 1, **characterized in that** the eTPU is a closed-cell eTPU.

3. Pneumatic vehicle tyre according to at least one of the preceding claims, **characterized in that** in the axial centre (5) of the tyre (1) the thickness D of the sheet is 10% to 50%, preferably 20% to 40%, of the total thickness G of the tyre.

4. Pneumatic vehicle tyre according to at least one of the preceding claims, **characterized in that**
the sheet (6) is arranged in the axial centre (5) radially between the carcass (8) and the tread (4) of the tyre, and at the same time is preferably connected in a material-bonding manner to the carcass and/or the tread.

5. Pneumatic vehicle tyre according to at least one of the preceding claims, **characterized in that** the sheet (6) is arranged in the axial centre (5) radially inside the carcass (8), in particular is connected in a material-bonding manner to the carcass.

6. Pneumatic vehicle tyre according to at least one of the preceding claims, **characterized in that** the sheet (6) extends over at least 80%, preferably at least 100%, particularly preferably at least 120%, of a width extent of the tread (4), measured parallel to the carcass (4), and **in that** the sheet ends radially outside the bead regions (2).

7. Pneumatic vehicle tyre according to at least one of the preceding claims, **characterized in that** the sheet (6) is arranged radially inside the carcass (8) and **in that** the sheet (6) extends from the axial centre (5) to radially inside the bead regions (2), preferably **in that**, when the pneumatic vehicle tyre (1) is fitted on a rim (1), the sheet is at the same time intended for contacting the rim (1).

8. Pneumatic vehicle tyre according to at least one of the preceding claims, **characterized in that**
the sheet (6) extends from the axial centre (5) over both sidewalls (3 ) of the tyre and in particular ends in the two bead regions (2).

9. Pneumatic vehicle tyre according to at least one of the preceding claims, **characterized in that** the sheet (6) is arranged at least along the entire extent of the tread (4) and in particular ends in shoulder regions (11) of the tyre.

10. Pneumatic vehicle tyre according to at least one of the preceding claims, **characterized in that** at least 90% by weight, preferably at least 95% by weight, particularly preferably 100% by weight, of the sheet is formed from the eTPU.

11. Pneumatic vehicle tyre according to at least one of the preceding claims, **characterized in that** the pneumatic vehicle tyre including the sheet is produced in one piece by means of a vulcanizing process, in particular a shaping vulcanizing process.

12. Pneumatic vehicle tyre according to at least one of the preceding claims, **characterized in that** it is a tyre with a tyre width (12) of 18 mm to 220 mm, preferably of 23 mm to 65 mm or of 50 mm to 180 mm.

13. Pneumatic vehicle tyre (1) according to at least one of the preceding claims, **characterized in that** it is a pneumatic vehicle tyre for a bicycle and/or a wheelchair.

14. Pneumatic vehicle tyre (1) according to at least one of the preceding claims, **characterized in that** it is a pneumatic vehicle tyre for a light vehicle with a motorized drive, preferably with an auxiliary motorized drive or a purely motorized drive.

15. Vehicle wheel comprising a rim (7) and a pneumatic vehicle tyre (1) according to at least one of the preceding claims fitted on the rim.

## Revendications

1. Pneumatique (1) de véhicule, de manière préférée pneu de véhicule léger, de manière particulièrement préférée pneu de bicyclette et/ou pneu de fauteuil roulant et/ou pneu de motocyclette, comportant des zones de talon (2), deux flancs (3) s'étendant vers l'extérieur radialement depuis les zones de talon, une carcasse (8) s'étendant d'une zone de talon à l'autre sur les flancs et une bande de roulement (4) disposée radialement à l'extérieur de la carcasse,
et comportant une plaque (6) en polyuréthane disposée radialement à l'intérieur de la bande de roulement (4) au moins au centre axial (5) du pneu, la plaque (6) en tant que partie du pneu (1) étant reliée par liaison de matière à d'autres composants du pneu,
**caractérisé en ce que**
le polyuréthane de la plaque (6) est un polyuréthane thermoplastique expansé (eTPU).

2. Pneumatique de véhicule selon la revendication 1, **caractérisé en ce que** l'eTPU est un eTPU à pores fermés.

3. Pneumatique de véhicule selon au moins l'une des revendications précédentes, **caractérisé en ce que** s'applique dans le centre axial (5) du pneu (1) le fait que l'épaisseur D de la plaque représente 10 % à 50 %, de manière préférée 20 % à 40 %, de l'épaisseur totale G du pneu.

4. Pneumatique de véhicule selon au moins l'une des revendications précédentes, **caractérisé en ce que**
la plaque (6) dans le centre axial (5) est disposée radialement entre la carcasse (8) et la bande de roulement (4) du pneu, de manière préférée est reliée par liaison de matière à la carcasse et/ou à la bande de roulement.

5. Pneumatique de véhicule selon au moins l'une des revendications précédentes, **caractérisé en ce que** la plaque (6) est disposée radialement à l'intérieur de la carcasse (8) dans le centre axial (5), en particulier est reliée par liaison de matière à la carcasse.

6. Pneumatique de véhicule selon au moins l'une des revendications précédentes, **caractérisé en ce que** la plaque (6) s'étend sur au moins 80 %, de manière préférée au moins 100 %, de manière particulièrement préférée au moins 120 %, d'une extension de largeur de la bande de roulement (4) mesurée parallèlement à la carcasse (4), et que la plaque se termine radialement à l'extérieur des zones de talon (2).

7. Pneumatique de véhicule selon au moins l'une des revendications précédentes, **caractérisé en ce que** la plaque (6) est disposée radialement à l'intérieur de la carcasse (8) et que la plaque (6) s'étend du centre axial (5) à radialement à l'intérieur des zones de talon (2), de manière préférée que la plaque est prévue pour entrer en contact avec la jante (1) lorsque le pneumatique (1) de véhicule est monté sur une jante (1).

8. Pneumatique de véhicule selon au moins l'une des revendications précédentes, **caractérisé en ce que**
la plaque (6) s'étend depuis le centre axial (5) sur les deux flancs (3) du pneu et se termine en particulier dans les deux zones de talon (2).

9. Pneumatique de véhicule selon au moins l'une des revendications précédentes, **caractérisé en ce que** la plaque (6) est disposée au moins le long de toute l'extension de la bande de roulement (4) et se termine en particulier dans des zones d'épaulement (11) du pneu.

10. Pneumatique de véhicule selon au moins l'une des revendications précédentes, **caractérisé en ce que** la plaque est formée à partir de l'eTPU à au moins 90 % en poids, de manière préférée à au moins 95 % en poids, de manière particulièrement préférée à 100 % en poids.

11. Pneumatique de véhicule selon au moins l'une des revendications précédentes, **caractérisé en ce que** le pneumatique de véhicule, y compris la plaque, est fabriqué d'une seule pièce au moyen d'un procédé de vulcanisation en particulier de formage.

12. Pneumatique de véhicule selon au moins l'une des revendications précédentes, **caractérisé en ce qu'**il s'agit d'un pneu avec une largeur (12) de pneu de 18 mm à 220 mm, de manière préférée de 23 mm à 65 mm ou de 50 mm à 180 mm.

13. Pneumatique (1) de véhicule selon au moins l'une des revendications précédentes, **caractérisé en ce qu'**il s'agit d'un pneumatique de véhicule pour une bicyclette et/ou un fauteuil roulant.

14. Pneumatique (1) de véhicule selon au moins l'une des revendications précédentes, **caractérisé en ce qu'**il s'agit d'un pneumatique de véhicule pour un véhicule léger avec un entraînement motorisé, de manière préférée avec un entraînement motorisé auxiliaire ou un entraînement purement motorisé.

15. Roue de véhicule comportant une jante (7) et un pneumatique (1) de véhicule monté sur la jante selon au moins l'une des revendications précédentes.
